# EUROPEAN PATENT SPECIFICATION

(11) **EP 3 438 803 B1**
(45) Date of publication and mention of the grant of the patent: **25.01.2023**
(21) Application number: 18186118.8
(22) Date of filing: 27.07.2018
(51) Int. Cl.: G06F 3/044, G06F 3/041

(54) **ARRAY SUBSTRATE, SELF-CAPACITIVE TOUCH DISPLAY PANEL, AND ELECTRONIC APPARATUS**
ARRAY-SUBSTRAT, SELBSTKAPAZITIVE BERÜHRUNGSEMPFINDLICHE ANZEIGETAFEL UND ELEKTRONISCHE VORRICHTUNG
SUBSTRAT MATRICIEL, PANNEAU D'AFFICHAGE TACTILE AUTO-CAPACITIF ET APPAREIL ÉLECTRONIQUE

(30) Priority: 31.07.2017 CN 201710646419; 31.08.2017 CN 201710783734
(43) Date of publication of application: 06.02.2019
(73) Proprietor: GUANGDONG OPPO MOBILE TELECOMMUNICATIONS CORP., LTD., Wusha, Chang'an Dongguan, Guangdong 523860 (CN)
(72) Inventor: Zeng, Yuanqing, Dongguan City, Guangdong 523860 (CN)
(74) Representative: Manitz Finsterwald Patent- und Rechtsanwaltspartnerschaft mbB

(56) References cited:
- US-A1- 2014 084 992
- US-A1- 2016 259 443
- US-A1- 2016 364 060
- US-A1- 2016 370 925
- US-A1- 2017 017 330
- US-A1- 2017 090 633

## Description

### BACKGROUND

### Field

The present disclosure relates to a technical field of electronic apparatuses, and more particularly relates to an array substrate, a self-capacitive touch display panel, and an electronic apparatus.

### Background

A self-capacitive touch control method is widely used in a technical field of display devices. There is a need to decrease dimensions of touch control units when it is required to meet a touch control resolution requirement of the touch control units. In a related art, an in-cell self-capacitive touch display panel includes a large number of touch control units that use square block patterns.

Each of the touch control units correspondingly connects with a touch control metal wire by a touch control channel. In other words, the touch control metal wire connects with the touch control unit in the touch control channel. When a size of the in-cell self-capacitive touch display panel increasingly increases, a number of the touch control units increases, such that a number of the touch control metal wires and the touch control channels raises, thereby resulting in size and cost increments of the in-cell self-capacitive touch display panel. An array substrate in accordance with the preamble of claim 1 is known from documents US 2016/370925 A1 and US 2016/259443 A1.

US 2016/370925 A1 discloses that an in cell touch panel, a touch detection method and a display device. The in-cell touch panel comprises: a substrate, a plurality of self-capacitance electrodes located on said substrate and arranged in an array, and a touch sensing unit for determining the touch position by sensing capacitance value changes on the self-capacitance electrodes. The number of elements in each column of self-capacitance electrodes is n and there is a submultiple m of n, and a first column of self-capacitance electrodes includes n/m groups of self-capacitance electrodes divided in the sequence of column adjacency. Each group includes m self-capacitance electrodes and the self-capacitance electrodes in the same group are electrically connected by the same wire. The second column of self-capacitance electrodes include m groups of self-capacitance electrodes, each group includes n/m self-capacitance electrodes and the self-capacitance electrodes in the same group are electrically connected by a second wire.

US 2016/259443 A1 discloses that a capacitive touch structure, an in-cell touch panel, a display device and a scanning method thereof. The capacitive touch structure includes: a plurality of self-capacitance electrodes (10) disposed in a same layer and located in at least two regions contained in the layer surface where self-capacitance electrodes (10) are located; region electrodes (20) located in each of the regions and disposed in the same layer with the self-capacitance electrodes (10); first wires connected with the self-capacitance electrodes (10), wherein there is at least a plurality of first wires (41) that satisfy the following conditions: one of the first wire (41) is connected with at least two of the self-capacitance electrodes (10) located in different regions respectively; second wires connected with the region electrodes (20), wherein the region electrodes in respective regions are electrically connected with different second wires; and a touch sensing chip connected with the first wires (41) and the second wires.

### SUMMARY OF THE DISCLOSURES

Objectives of the present disclosure are to provide an array substrate, a self-capacitive touch display panel, and an electronic apparatus, such that a size of the self-capacitive touch display panel is reduced and touch events on the self-capacitive touch display panel are reliably and unambiguously detected. These objectives are satisfied by the independent claims.

In order to achieve the above-mentioned objectives, an embodiment of a first aspect of the present disclosure provides an array substrate as defined in claim 1.

In order to achieve the above-mentioned objectives, an embodiment of a second aspect of the present disclosure provides an array substrate as defined in claim 2.

In order to achieve the above-mentioned objectives, an embodiment of a third aspect of the present disclosure provides a self-capacitive touch display panel as defined in claim 11.

In order to achieve the above-mentioned objectives, an embodiment of a fourth aspect of the present disclosure provides an electronic apparatus as defined in claim 12.

In embodiments of array substrate of the present disclosure, the interval rows are defined by adjacent touch control rows. The interval rows include a middle interval row at a middle position of the touch control region. Each of the touch control connection lines connects with two touch control units. The touch control columns include first touch control columns and second touch control columns, wherein each of the first touch control columns is adjacent to one of the second touch control columns and each of the second touch control columns is adjacent to one of the first touch control columns. Two touch control units disposed in each of the first touch control columns and connected with a same touch control connection lines are symmetrically arranged relative to the middle interval row. A distance of M/2 interval rows is spaced between the two touch control units that are connected by the second touch control connection line. A number of the touch control metal wires and the touch control channels are decreased. A size and cost of the self-capacitive touch display panel is reduced.

### BRIEF DESCRIPTION OF DRAWINGS

FIG. 1A is a front view of an electronic apparatus according to one embodiment of the present disclosure.
FIG. 1B is a rear view of the electronic apparatus of FIG. 1A.
FIG. 2 is an exploded structural diagram of the electronic apparatus of FIG. 1A.
FIG. 3 is an illustrative structural diagram of a self-capacitive touch display panel according to one embodiment of the present disclosure.
FIG. 4 is an illustrative cross-sectional diagram of the self-capacitive touch display panel along a direction of a line A-A' in FIG. 3 according to one embodiment of the present disclosure.
FIG. 5 is an illustrative structural diagram of an array substrate according to a first embodiment of the present disclosure.
FIG. 6 is an illustrative structural diagram of a touch control region according to a first embodiment of the present disclosure.
FIG. 7 is a partially structural diagram of the touch control region in FIG. 6 according to the first embodiment of the present disclosure.
FIG. 8 is another partially structural diagram of the touch control region in FIG. 6 according to the first embodiment of the present disclosure.
FIG. 9 is a partially structural diagram of a touch control region according to a second embodiment of the present disclosure.
FIG. 10 is a partially structural diagram of the touch control region in FIG. 9 according to the second embodiment of the present disclosure.
FIG. 11 is a partially structural diagram of a touch control region according to a third embodiment of the present disclosure.
FIG. 12 is a partially structural diagram of a touch control region according to a fourth embodiment of the present disclosure.
FIG. 13 is a partially structural diagram of a touch control region according to a fifth embodiment of the present disclosure.
FIG. 14 is an illustrative structural diagram of an array substrate according to a second embodiment of the present disclosure.
FIG. 15 is an illustrative structural diagram of an array substrate according to a third embodiment of the present disclosure.

### DETAILED DESCRIPTION OF PREFERRED EMBODIMENTS

The following embodiments refer to the accompanying drawings for exemplifying specific implementable embodiments of the present disclosure in a suitable computing environment. It should be noted that the exemplary described embodiments are configured to describe and understand the present disclosure, but the present disclosure is not limited thereto.

In the descriptions of the present disclosure, the terms "center", "longitudinal", "lateral", " length", "width", "thickness", "upper", "lower", "front", "back", "left", "right", "vertical", "horizontal", "top", "bottom", "inner", "outer", "clockwise", "counterclockwise" directions, and other indicated directions or the position relation are based on the orientation or position relation shown in the figures. Only for convenience of describing the present disclosure and the simplification of the description, rather than indicating or implying that the means or elements referred to have a specific orientation, so that the above directions of the present disclosure cannot be understood as limitations. In addition, the terms "first" and "second" are used only for purposes of description, and cannot be understood to indicate or imply a relative importance or to implicitly indicate the number of technical features indicated. Thus, the features "first" and "second" can be expressly or implicitly included in one or more of the features. In the description of the present disclosure, the meanings of "multiple" are two or more, unless specifically limited otherwise.

In descriptions of the present disclosure, terms "installed", "connected", and "connection" unless explicitly stated and limited, the terms should be interpreted broadly. For example, the connection can be fixedly connected, detachably connected, or integrally connected, and can be mechanically connected, electrically connected, or can be in communication with each other. The connection can be directly connected or indirectly connected through an intermediate medium, and can be internal connection of two elements or an interaction relationship between the two elements.

In the present disclosure, unless explicitly stated and defined otherwise, a first feature is "on" or "under" a second feature includes that the first feature can be in a direct contact with the second feature, or that the first and second features are not in a direct contact but are in contact with each other through additional features. Furthermore, a first feature is "above" or "under" a second feature includes that the first feature is right above or obliquely above the second feature, or that a height of the first feature is higher than that of the second feature. The first feature is "below" the second feature includes that the first feature is right below or obliquely below the second feature, or that a height of the first feature is lower than that of the second feature.

The following descriptions provide many different embodiments or examples for implementing different structures of the present disclosure. In order to simplify the descriptions of the present disclosure, components and arrangements of specific examples are described below. They are merely examples and are not intended to limit the present disclosure. In addition, reference numerals and reference letters can be repeated in different examples, and such repetition is for the purpose of simplicity and clarity, and is not intended to indicate the relationship between the various embodiments and/or arrangements discussed. In addition, the disclosure provides examples of various specific processes and materials, but one of ordinary skill in the art can realize other processes and the use of other materials.

Embodiments of the present disclosure include an array substrate, a self-capacitive touch display panel, and an electronic apparatus, and are described in detail below.

In the embodiments of the present disclosure, the self-capacitive touch display panel is arranged in an electronic apparatus, such as a mobile phone, a personal computer, a tablet computer, a personal digital assistant (PDA), and the like.

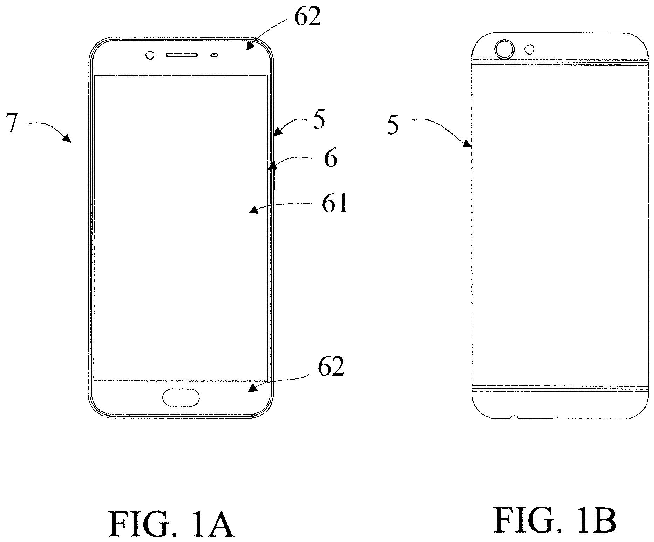

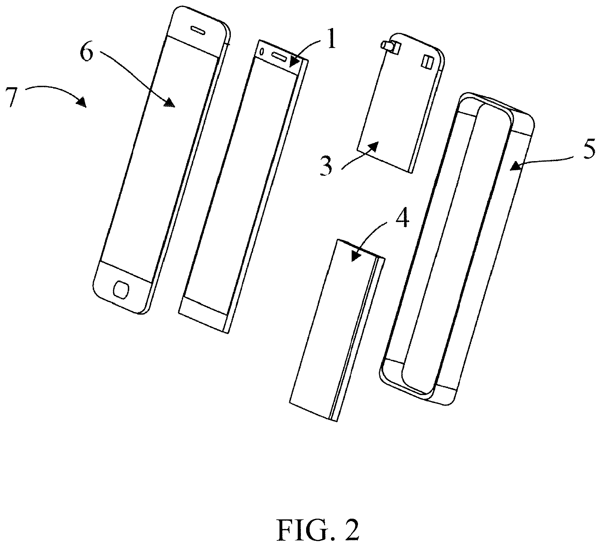

FIG. 1 is an illustrative structural diagram of an electronic apparatus 7 according to one embodiment of the present disclosure. FIG. 2 is an exploded structural diagram of the electronic apparatus 7 in FIG. 1 according to one embodiment of the present disclosure. The electronic apparatus 7 includes a cover plate 6, a self-capacitive touch display panel 1, a printed circuit board 3, a battery 4, and a rear cover 5. The cover plate 6 is arranged on the self-capacitive touch display panel 1 for covering surface of the self-capacitive touch display panel 1. In an embodiment, the cover plate 6 is a transparent glass cover plate. For example, the cover plate 6 is a glass cover plate made of a transparent material such as sapphire. The cover plate 6 includes a display area 61 and a non-display area 62. The display area 61 is configured to display images or pictures of the electronic apparatus, or perform touch control operations. A top region of the non-display area 62 includes openings that are configured to transmit sound and light to external environment, and a bottom region of the non-display area 62 includes functional components, such as a fingerprint element and a touch button.

In an embodiment, a non-display area is directly formed on the self-capacitive touch display panel 1 and corresponds to the non-display area 62 of the cover plate 6. The self-capacitive touch display panel 1 includes the non-display area, such as a transparent non-display area, for transmitting light signals to external environment. The non-display area of the self-capacitive touch display panel 1 overlaps the non-display area 62 of the cover plate 6. For example, a front camera and an optical sensor are arranged on the non-display area of the self-capacitive touch display panel 1, such that the light signals are transmitted to or received from the front camera and the optical sensor.

The self-capacitive touch display panel 1 is combined with the cover plate 6, where the combination of the self-capacitive touch display panel 1 and the cover plate 6 is defined as a display panel of the electronic apparatus 7.

For example, the self-capacitive touch display panel 1 is attached below the cover plate 6.

In an embodiment, the printed circuit board 3 is installed inside the rear cover 5. For example, the printed circuit board 3 is a main circuit board of the electronic apparatus 7. An antenna, a motor, a microphone, a camera, a light sensor, a telephone receiver, a processor and related functional components are arranged on the printed circuit board 3 in an integration manner. The self-capacitive touch display panel 1 is electrically connected with the printed circuit board 3.

The battery 4 is arranged in the rear cover 5 and electrically connected with the printed circuit board 3 to supply power to the electronic apparatus 7.

A combination of the rear cover 5 and the cover plate 6 forms a shell body that defines a closed space.

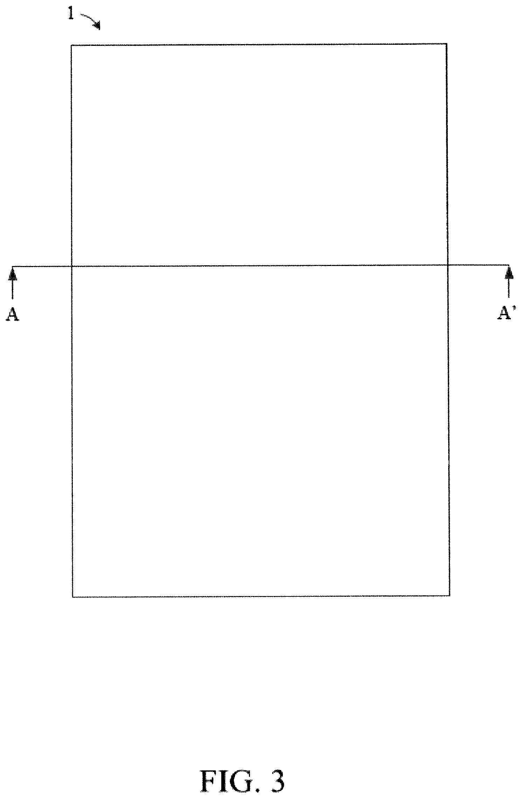

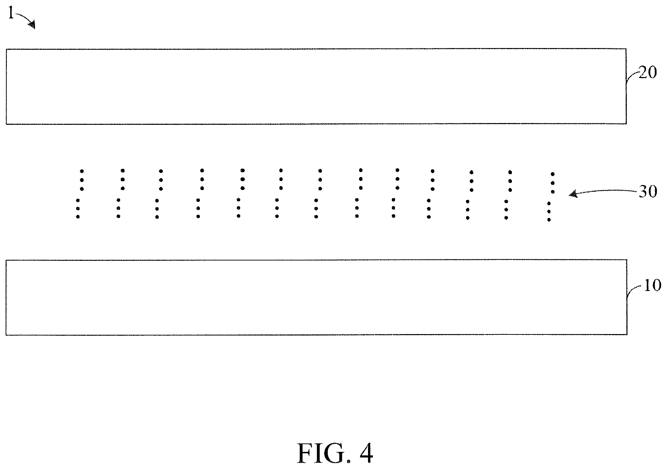

FIG. 3 is an illustrative structural diagram of a self-capacitive touch display panel according to one embodiment of the present disclosure. FIG. 4 is a cross-sectional diagram of the self-capacitive touch display panel along a direction of a line A-A' in FIG. 3 according to one embodiment of the present disclosure.

The self-capacitive touch display panel 1 includes a color film substrate 20, an array substrate 10, and a liquid crystal layer 30. The array substrate 10 and the color film substrate 20 are oppositely arranged, and the liquid crystal layer 30 is arranged between the color film substrate 20 and the array substrate 10. The array substrate 10 includes a common electrode having multiplexed functions, for example, where the common electrode can be divided into a plurality of touch control units. For example, the touch control units are touch control circuits or touch control sensor. In a touch control period, the touch control units receive touch control signals from external environment for performing touch control operations. In a display period, the touch control units receive a common electrode signal of a user for a display operation. In an embodiment, during the touch control period and the display period, a touch control circuit and a display circuit are configured for activating the touch control operations and the display operation by a time-sharing driving mode.

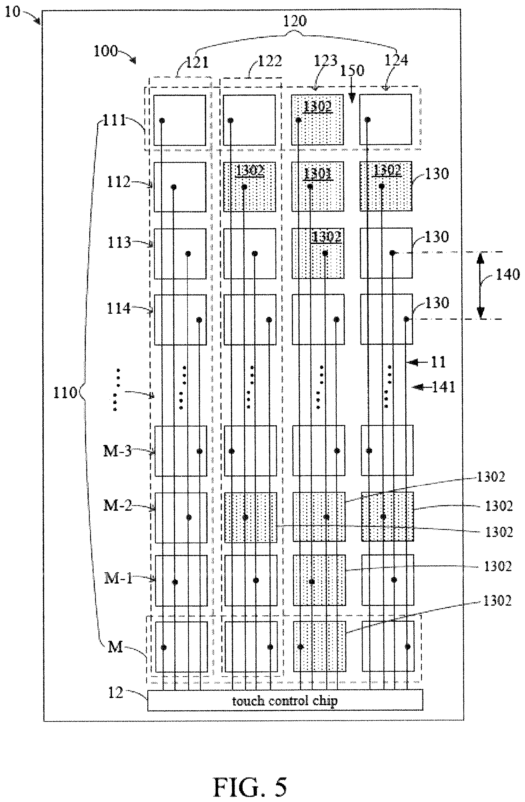

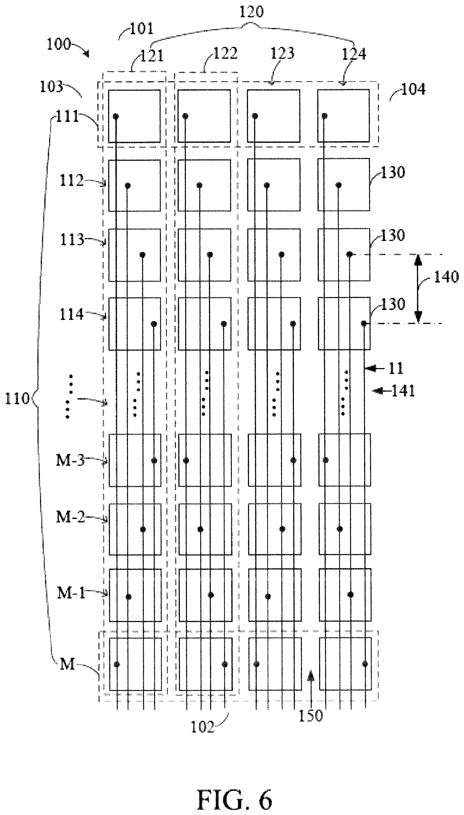

FIG. 5 is an illustrative structural diagram of an array substrate according to one embodiment of the present disclosure. FIG. 6 is an illustrative structural diagram of a touch control region according to a first embodiment of the present disclosure. FIG. 5 and FIG. 6 only depicts a part of the touch control region 100, and a part of touch control units 130 and the touch control connection lines 11 within the touch control region 100. It should be noted that in at least an embodiment, the touch control units 130 in the touch control region 100 of the array substrate 10 is omitted along a column direction, and is also omitted along a vertical direction. In addition, the touch control unit 130 is also omitted along a row direction, and is also omitted along a horizontal direction (not shown).

In an embodiment, the array substrate 10 includes a plurality of touch control units 130, a plurality of touch control connection lines 11, and a touch control chip 12.

The touch control connection lines 11 are connected between the touch chip 12 and the touch control units 130, and each touch control connection line 11 corresponds to a touch sensing channel. In an embodiment, each touch control connection line 11 connects with two touch control units 130, such that a number of the touch control connection lines 11 is decreased and the cost of the electronic apparatus is reduced. When space of the touch control connection lines 11 occupying the array substrate 10 is reduced, a size of the array substrate 10 is reduced, such that a size of the self-capacitive touch display panel 1 is reduced.

In an embodiment, the touch control units 130 are arranged in a matrix configuration that includes a plurality of touch control rows 110 and a plurality of touch control columns 120, where the touch control rows 110 intersect the touch control columns 120 to construct a touch control region 100. For example, a number of the touch control rows 110 is M, including a first touch control row 111, a second touch control row 112, a third touch control row 113, a fourth touch control row 114, ..., a (M-3)th touch control row, a (M-2)th touch control row, a (M-1)th touch control row, and a Mth touch control row. A number of the touch control columns 120 is N, including a first touch control column 121, a second touch control column 122, a third touch control column 123, a fourth touch control column 124, ..., and a Nth touch control column.

It should be noted that in an embodiment, M and N are defined as two integers greater than 2, where M is an even number. For example, M is a number 28, 30, 32, 34, 36, or 40, and N is a number 16, 17, 18, 19, 20, or 21. An interval row 140 is defined as a space or a distance between every two adjacent touch control rows 110, and there are multiple interval rows 140 (i.e., (M-1) rows) between touch control rows 110. For example, if M is 30, a number of interval rows 140 is 29. The interval rows 140 includes a middle interval row 141 that is arranged in a middle portion of the touch control region 100. For example, if a number of interval rows 140 is 29, the middle interval row 141 is defined as a fifteenth row of the interval rows 140. An interval column 150 is defined as a space or a distance between every two adjacent touch control columns 120, and there are multiple interval columns 150 (i.e., (N-1) columns) between touch control columns 120. For example, if N is 18, a number of interval columns 150 is 17.

In an embodiment, intervals of the interval rows 140 are the same, and intervals of the interval columns 150 are the same. Each of the touch control units 130 is rectangular in shape.

In the first touch control column 121, two touch control units 130 connected by a same touch control connection line 11 are symmetrically arranged relative to the middle interval row 141. In the second touch control column 122, two touch control units 130 connected by a same touch control connection line 11 are asymmetrically arranged at two sides of the middle interval row 141, and a distance of M/2 interval rows 140 is spaced between the two touch control units 130 that are connected by the same touch control connection line 11. For example, if M is 30, there are 15 interval rows 140 between the two touch control units 130 that are connected by the same touch control connection line 11.

In an embodiment, in the first touch control column 121, every two touch control units 130 connected by the same touch control connection line 11 are described below. When a touch control unit 130 of the first touch control column 121 connected with the touch control connection line 11 is located in m1th touch control row 110, the other touch control unit 130 of the first touch control column 121 connected with the touch control connection line 11 is located in (M-m1+1)th touch control row 110, where m1 is an integer less than or equal to M. For example, if M is 30 and m1 is 5, the two touch control units 130 of the first touch control column 121 that are connected with the touch control connection line 11 are located in a fifth touch control row 110 and a twenty-sixth touch control row 110, respectively.

In an embodiment, in the second touch control column 122, every two touch control units 130 connected by the same touch control connection line 11 are described as follows. When a touch control unit 130 of the second touch control column 122 connected with the touch control connection line 11 is located in m2th touch control row 110, the other touch control unit 130 of the second touch control column 122 connected with the touch control connection line 11 is located in (M/2+m2)th touch control row 110, where m2 is an integer less than or equal to M and m2 is an integer less than or equal to M/2. When m2 is an integer greater than M/2, the other touch control unit 130 of the second touch control column 122 connected with the touch control connection line 11 is located in (m2-M/2)th touch control row 110. For example, if M is 30 and m2 is 5, the two touch control units 130 of the second touch control column 122 that are connected with the touch control connection line 11 are located in a fifth touch control row 110 and a twentieth touch control row 110, respectively.

In an embodiment, a user can touch multiple touch control units 130 in the touch control region 100. For example, the user touches two adjacent touch control units 130 at a time, where the two adjacent touch control units 130 are located in a same touch control row 110 (e.g., a first touch control row 111) and along two adjacent touch control columns 120 (e.g., a first touch control column 121 and a second touch control column 122). The touch control units 130 in the first touch control row 111 and the first touch control column 121 electrically connects with the Mth touch control row 110 and the first touch control column 121 using a touch control connection line 11. The touch control units 130 in the first touch control row 111 and the second touch control column 122 electrically connects with the (M/2+1)th (e.g., (M-3)th) touch control row 110 and the second touch control column 122 using a touch control connection line 11. When the user touches two touch control units 130 in the first touch control row 111, the first touch control column 121, and the second touch control column 122 for generating touch control signals, the touch control units 130 in Mth touch control row 110 and the first touch control column 121 also generates the touch control signals. Similarly, the touch control units 130 in the (M/2+1)th touch control row 110 also generates the touch control signals. The touch control chip 12 is configured to determine positions of four touch control units 130. Because positions of two touch control units 130 in the first touch control row 111 are adjacent each other, and a position of the touch control unit 130 in the Mth touch control row 110 is away from a position of the touch control unit 130 in the (M/2+1)th touch control row 110, the touch control chip 12 determines that two positions of two touch control units 130 are regarded as touch positions of the user, thereby improving touch control resolution of touch control units 130.

In an embodiment, a user can touch multiple touch control units 130 in the touch control region 100. For example, in a cross-shaped portion of the touch control region 100, the user touches five adjacent touch control units 130 (e.g., a central touch control unit 1301, and four peripheral touch control units 1302 surrounding the first touch control unit 1301) at a time. The touch control region 100 further includes a T-shaped portion, including five peripheral touch control units 1302, of the touch control region 100 electrically corresponding to the cross-shaped portion. Since a pattern of the cross-shaped portion is different from a pattern of the T-shaped portion, the five touch control units 130 of the cross-shaped portion and the five touch control units 130 of the T-shapes pattern based on positions of the touch control units 130 or based on capacitance difference can be determined, where the cross-shaped portion is regarded as the pattern that is factually touched by the user, and the T-shaped portion is regarded as an induced pattern, thereby improving touch control resolution of touch control units 130. For example, capacitance differences between the central touch control unit 1301 and four peripheral touch control units 1302 of the cross-shaped portion is greater than capacitance differences between the five peripheral touch control units 1302 of T-shaped portion, such that the cross-shaped portion is easily detected as the factual touched pattern.

Based on above-mentioned descriptions, a number of touch control connection lines 11 of electronic apparatuses are saved and touch control resolution is improved, such that the self-capacitive touch display panel can be used in narrow-frame equipment or large-screen equipment.

In an embodiment, each of the touch control columns 120 in the touch control region 100 includes a first end portion 101, a second end portion 102 opposite to the first end portion 101, a first side portion 103, and a second side portion 104 opposite to the first side portion 103. The first side portion 103 and the second side portion 104 connect with two sides of the first end portion 101 and the second end portion 102. The touch control connection lines 11 in the first touch control column 121 are sequentially arranged along a direction from the first side portion 103 to the second side portion 104. Lengths of the touch control connection lines 11 become shorter along the direction within the first end portion 101 and the second end portion 102. Longer touch control connection lines 11 are electrically connected with touch control units 130 near the first end portion 101 and the second end portion 102 of the touch control region 100. Shorter touch control connection lines 11 are electrically connected with touch control units 130 near a middle portion of the touch control region 100. In an embodiment, connections between the touch control connection lines 11 and the touch control units 130 from the first side portion 103 to the second side portion 104 in the first touch control column 121 are defined as 1(M), 2(M-1), 3(M-2), 4(M-3),..., M/2(M/2+1), where 1, 2, 3, 4,..., M/2 correspond to a part of touch control units 130 connected to the touch control connection lines 11, and each of the touch control units 130 connects with a touch control connection line 11, and M, M-1, M-2, M-3,..., M/2+1 correspond to the other part of touch control units 130 connected to the touch control connection lines 11, and each of the touch control units 130 connects with a touch control connection line 11. Therefore, a touch control connection line 11 is configured to connect two touch control units 130. For example, a touch control connection line 11 connects a touch control unit 130 of first touch control row 111 with a touch control unit 130 of Mth touch control row 110. A touch control connection line 11 connects a touch control unit 130 of (M/2)th touch control row 110 with a touch control unit 130 of (M/2+1)th touch control row 110.

In an embodiment, the touch control connection lines 11 in the second touch control column 122 are sequentially arranged along the direction from the first side portion 103 to the second side portion 104. Lengths of the touch control connection lines 11 become shorter along the direction within the first end portion 101 and the second end portion 102. In an embodiment, connections between the touch control connection lines 11 and the touch control units 130 from the first side portion 103 to the second side portion 104 in the second touch control column 122 are defined as 1(M/2+1), 2(M/2+2), 3(M/2+3), 4 (M/2+4), ... , M/2(M), where 1, 2, 3, 4,..., M/2 correspond to a part of touch control units 130 connected to the touch control connection lines 11, and each of the touch control units 130 connects with a touch control connection line 11, and M/2+1, M/2+2, M/2+3, M/2+4,..., M correspond to the other part of touch control units 130 connected to the touch control connection lines 11, and each of the touch control units 130 connects with a touch control connection line 11. Therefore, a touch control connection line 11 is configured to connect two touch control units 130. For example, a touch control connection line 11 connects a touch control unit 130 of first touch control row 111 with a touch control unit 130 of (M/2+1)th touch control row 110. A touch control connection line 11 connects a touch control unit 130 of (M/2)th touch control row 110 with a touch control unit 130 of Mth touch control row 110.

As follows, eight touch control rows of M touch control rows 110 and eight touch control columns of N touch control columns 120, for example.

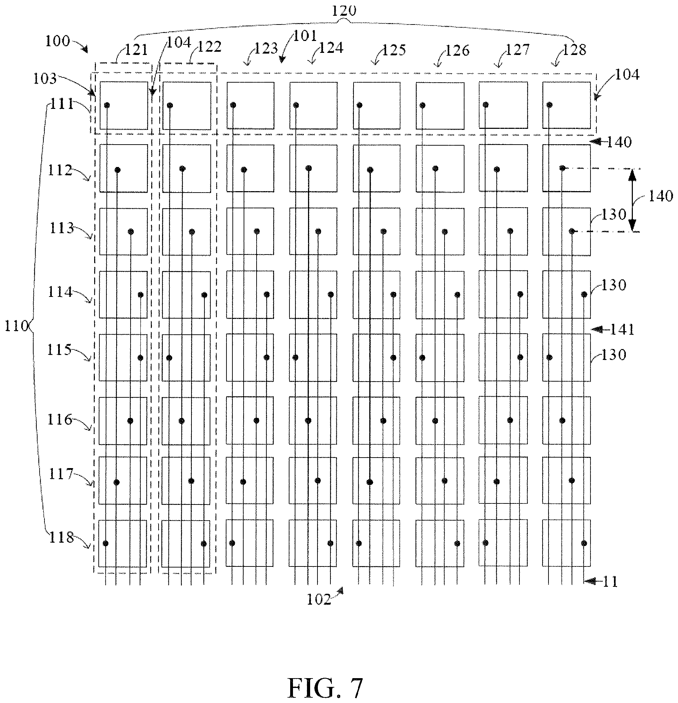

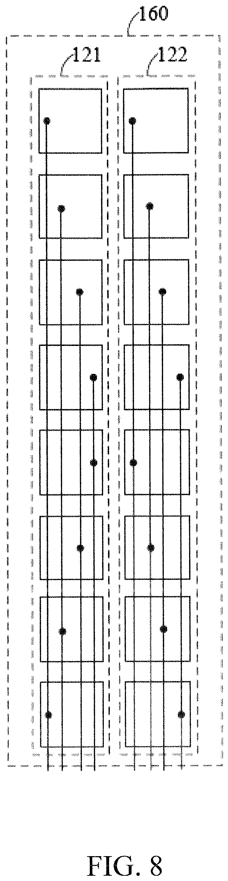

FIG. 7 is a partially structural diagram of the touch control region in FIG. 6 according to the first embodiment of the present disclosure. FIG. 8 is another partially structural diagram of the touch control region in FIG. 6 according to the first embodiment of the present disclosure. In FIG. 7, there are eight touch control rows 110 and eight touch control columns 120. In FIG. 8, there are eight touch control rows 110 and two touch control columns 120.

In an example of FIG. 7, the eight touch control rows 110 includes a first touch control row 111, a second touch control row 112, a third touch control row 113, a fourth touch control row 114, a fifth touch control row 115, a sixth touch control row 116, a seventh touch control row 117, and an eighth touch control row 118. The eight touch control columns 120 includes a first touch control column 121, a second touch control column 122, a third touch control column 123, a fourth touch control column 124, a fifth touch control column 125, a sixth touch control column 126, a seventh touch control column 127, an eighth touch control column 128.

In at least an embodiment, the first touch control column 121 and the second touch control column 122 are combined into a first touch control array 160, and the touch control region 100 includes arrangements of touch control arrays based on the first touch control array 160.

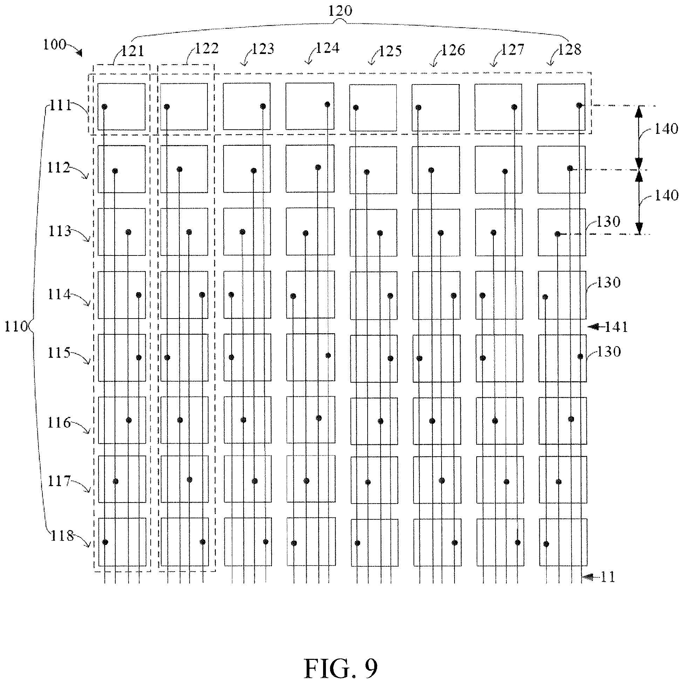

It should be noted that arrangements of the touch control region 100 is not limited thereto, and other types of arrangements can be used, for example, as depicted in FIG. 9.

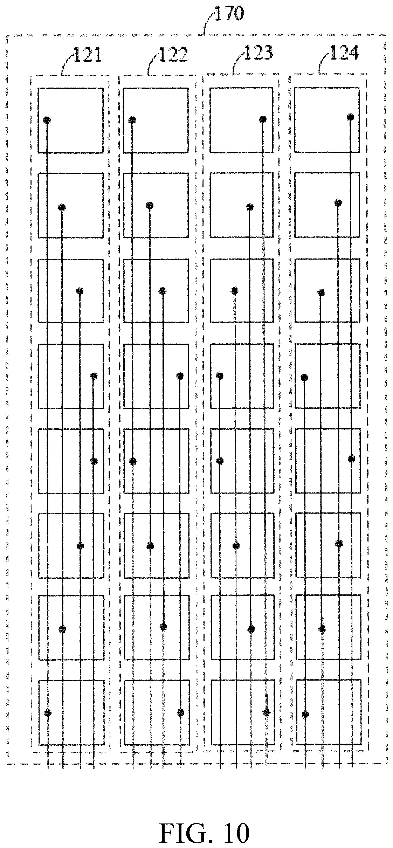

FIG. 9 is a partially structural diagram of a touch control region according to a second embodiment of the present disclosure. FIG. 10 is a partially structural diagram of the touch control region in FIG. 9 according to the second embodiment of the present disclosure. FIG. 9 is similar to FIG. 7, and differences of FIG. 7 and FIG. 9 are that the third touch control column 123 and the first touch control column 121 are symmetrically arranged relative to the second touch control column 122, and the fourth touch control column 124 and the second touch control column 122 are symmetrically arranged relative to the third touch control column 123.

In at least an embodiment, the first touch control column 121, the second touch control column 122, the third touch control column 123, and the fourth touch control column 124 are combined into a second touch control array 170, and the touch control region 100 includes arrangements of touch control arrays based on the second touch control array 170. FIG. 10 is a structural diagram of the second touch control array 170. FIG. 9 is a structural diagram of two second touch control arrays 170 of FIG. 10.

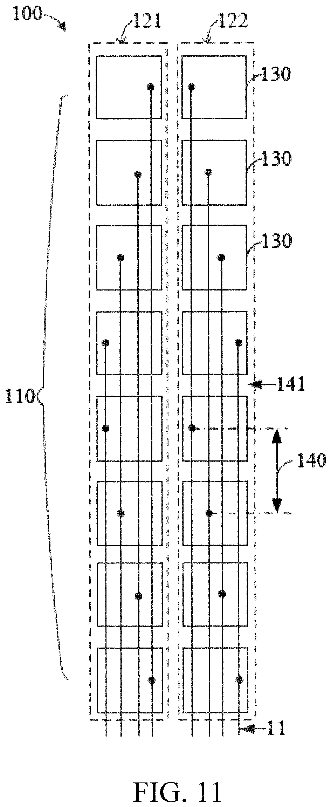

It should be noted that arrangements of the first touch control column 121 and the second touch control column 122 by the touch control connection lines 11 are not limited thereto, and other types of arrangements can be used, for example, as depicted in FIG. 11.

FIG. 11 is a partially structural diagram of a touch control region according to a third embodiment of the present disclosure. FIG. 11 is similar to FIG. 8, and differences of FIG. 11 and FIG. 8 are that the touch control connection lines 11 in the first touch control column 121 are sequentially arranged along the direction from the second side portion 104 to the first side portion 103. Lengths of the touch control connection lines 11 become shorter along the direction within the second end portion 102 and the first end portion 101.

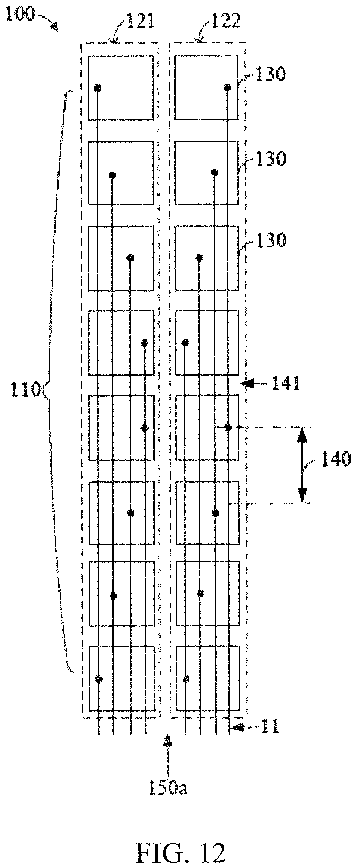

FIG. 12 is a partially structural diagram of a touch control region according to a fourth embodiment of the present disclosure. FIG. 12 is similar to FIG. 8, and differences of FIG. 12 and FIG. 8 are that the touch control connection lines 11 in the second touch control column 122 are sequentially arranged along the direction from the second side portion 104 to the first side portion 103. Lengths of the touch control connection lines 11 become shorter along the direction within the second end portion 102 and the first end portion 101.

It should be noted that, according to embodiments of the present disclosure, a touch control connection line 11 connects with two touch control units 130 in a same touch control column 120. Based on a definition of row, each of two touch control rows 110 has a touch control unit 130. In other embodiments, a touch control connection line 11 connects with two touch control units 130 in a same touch control row 110. Based on a definition of column, each of two touch control columns 120 has a touch control unit 130, that refers to above descriptions, and are not described in detail herein.

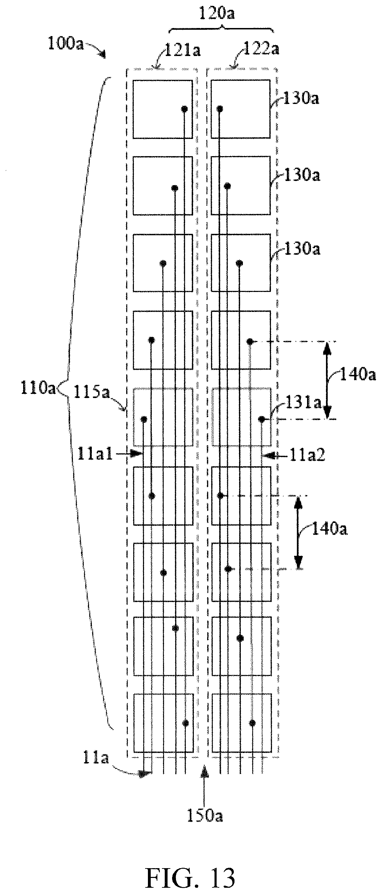

Based on above embodiments, M is an even number, and it should be noted that M can also be an odd number, as described in FIG. 13.

FIG. 13 is a partially structural diagram of a touch control region according to a fifth embodiment of the present disclosure. A touch control region 100a includes a plurality of touch control units 130a, a plurality of touch control connection lines 11a, and a touch control chip (not shown).

In an embodiment, the touch control units 130a are arranged in a matrix configuration that includes a plurality of touch control rows 110a and a plurality of touch control columns 120a. Differences of touch control rows 110a in FIG. 13 and touch control rows 110 in FIG. 5 are that a number of touch control rows 110a is an odd number. The touch control rows 110a includes a middle touch control row 115a that is arranged in a middle position of the touch control rows 110a. For example, if a number of the touch control rows 110a is 9, the middle position of the middle touch control row 115a is in fifth row, where the middle touch control row 115a includes a plurality of touch control units 131a. Structures and connection relations of the touch control rows 110a can be referred to above descriptions, and are not described in detail herein.

In an embodiment, the touch control columns 120a include a first touch control column 121a and a second touch control column 122a. The touch control units 130a is similar to the touch control units 130, and are not described in detail herein.

Differences of touch control connection lines 11a and touch control connection lines 11 are that the touch control connection lines 11a further includes the middle connection lines 11a1, 11a2 that connects with the touch control units 131a in the middle touch control row 115a. The middle connection line 11a1 or the middle connection lines 11a2 connects a touch control unit 131a of the middle touch control row 115a with a touch control chip, where other touch control connection lines 11a are similar to touch control connection lines 11, the touch control chip is also similar to touch control chip 12, and thus are not described in detail herein.

In an embodiment, there are a plurality of interval rows 140a and at least an interval column 150a between the touch control rows 110a, where the interval column 150a is similar to the interval column 150 in FIGS. 5-6, and thus are not described in detail herein. For example, comparing with interval rows 140 in FIGS. 5-6, interval rows 140a in FIG. 13 further includes an additional interval row.

In an embodiment, the touch control rows 110a are symmetrically arranged on two sides of the middle touch control row 115a, and connection relationships between the touch control rows 110a and the touch control connection lines 11a are not limited to connection relationships in FIG. 13, and other connection relationships can be referred to above contents, and descriptions are not repeated herein.

Based on above embodiments, M is an even number, and it should be noted that M can also be an odd number, such as 27, 29, 31, 33, 35, 37, 41, and the like. An odd number of M is taken as an example for descriptions.

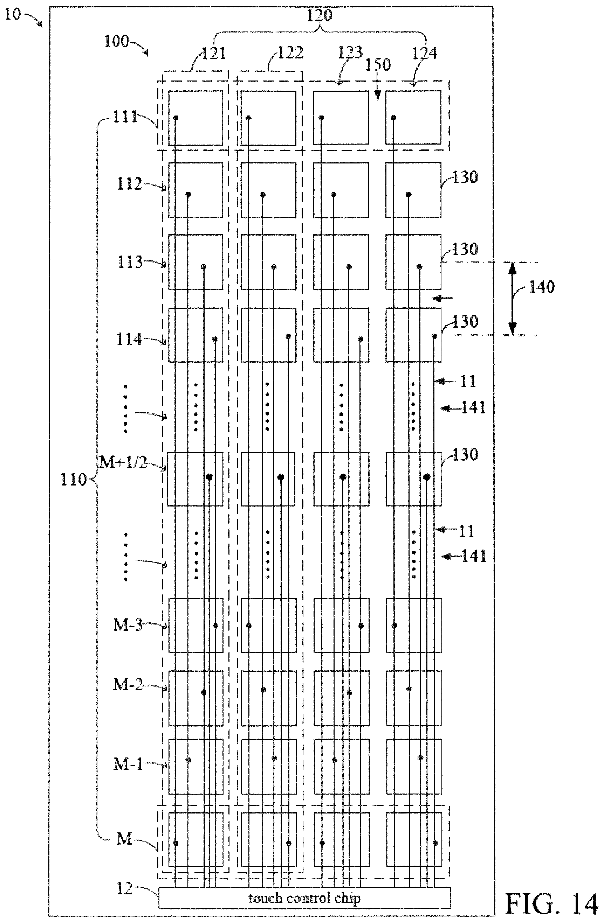

FIG. 14 is an illustrative structural diagram of an array substrate according to a second embodiment of the present disclosure. FIG. 14 is described on the basis of FIG. 5. A difference between the array substrate of FIG. 14 and the array substrate of FIG. 5 is that a number of touch control rows 110 in FIG. 14 is an odd number. In other words, M is the odd number. Each of the touch control units 130 of a middle touch control row 110 is connected to a touch control chip 12 by a touch control connection line 11. Every two touch control units of touch control units 130 arranged on two sides of the middle touch control row 110 are connected each other by a touch control connection line 11 that is connected to a touch control chip 12. In the first touch control column 121, every two touch control units 130 connected by a same touch control connection line 11 are symmetrically arranged relative to the middle touch control row 110. In the second touch control column 122, every two touch control units 130 connected by a same touch control connection line 11 are asymmetrically arranged at two sides of the middle touch control row 110, and a distance of (M-1)/2 touch control rows 110 is spaced between the two touch control units 130 that are connected by the same touch control connection line 11.

In an embodiment of FIG. 14, the touch control rows 110 include a middle touch control row 110 that is located in (M+1)/2th row. For example, there are a number of 29 rows and M is 29, where the middle touch control row 110 is located in fifteenth row. Each of the touch control units 130 of the middle touch control row 110 is connected to a touch control chip 12 by a touch control connection line 11. Every two touch control units of remaining touch control units 130 arranged on two sides of the middle touch control row 110 are connected each other by a touch control connection line 11. In an embodiment, each touch control connection line 11 connects with two touch control units 130, such that a number of the touch control connection lines 11 is decreased and the size and cost of the self-capacitive touch display panel is reduced.

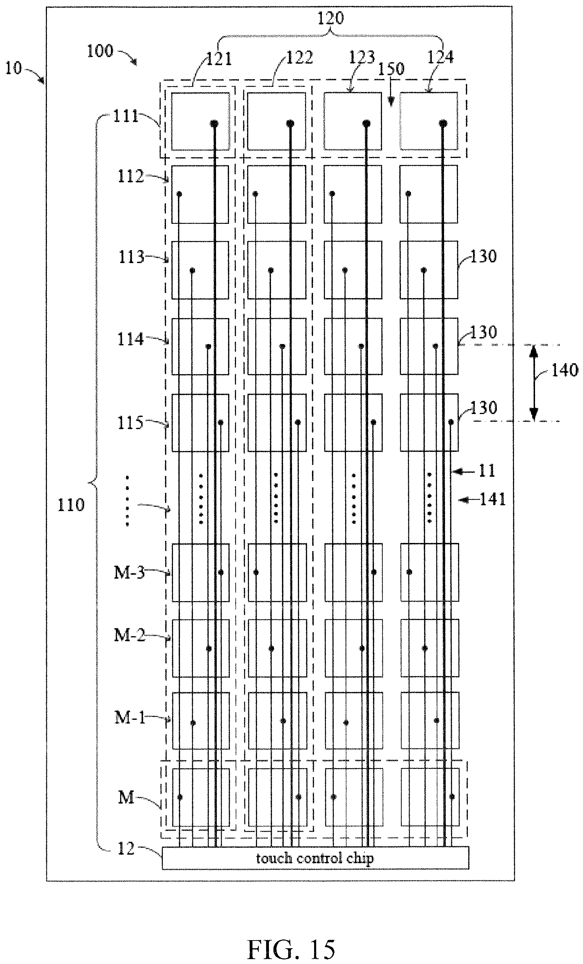

FIG. 15 is an illustrative structural diagram of an array substrate according to a third embodiment of the present disclosure. FIG. 15 is described on the basis of FIG. 5. A difference between the array substrate of FIG. 15 and the array substrate of FIG. 5 is that a number of touch control rows 110 in FIG. 15 is an odd number. In other words, M is the odd number. Each of the touch control units 130 of a preset touch control row 110 is connected to a touch control chip 12 by a touch control connection line 11. Every two touch control units 130 of touch control rows 110, except the preset touch control row 110, are connected each other by a touch control connection line 11 that is connected to a touch control chip 12. Reference can be made to the above contents in FIG. 5, and thus are not described in detail herein.

In an embodiment, the touch control row 110 includes a first touch control row 111 that is located in side portion of all the touch control rows 110, and the first touch control row 111 is the first row of all the touch control rows 110, or the Mth row of all the touch control rows 110. Each of the touch control units 130 of the first touch control row 111 is connected to a touch control chip 12 by a touch control connection line 11. Every two touch control units 130 of touch control rows 110, except the first touch control row 111, are connected each other by a touch control connection line 11 that is connected to a touch control chip 12. Reference can be made to the above contents in FIG. 5, and thus are not described in detail herein.

In FIG. 15, the interval rows 140 includes a middle interval row 141 that is arranged in a middle portion of interval rows 140 except the first touch control row 111 wherein the touch control rows 110 have same interval rows 140. Each of the touch control connection lines 11 connects two touch control units 130 of the touch control rows 110. In the first touch control column 121, two touch control units 130 connected by a same touch control connection line 11 are symmetrically arranged relative to the middle interval row 141. In the second touch control column 122, two touch control units 130 connected by a same touch control connection line 11 are asymmetrically arranged at two sides of the middle interval row 141, and a distance of (M-1)/2 interval rows 140 is spaced between the two touch control units 130 that are connected by the same touch control connection line 11.

In an embodiment, the electronic apparatus 7 may include more or fewer components than illustrated in FIG. 1 and FIG. 2, or include a combination of certain components, or different component arrangements. For example, the electronic apparatus 7 can further include a processor, a memory, components compatible to a BLUETOOTH protocol, and the like.

The actions of the method disclosed by the embodiments of present disclosure can be embodied directly as a hardware decoding processor can be directly executed by a hardware decoding processor, or by combinations of hardware and software codes in a decoding processor. The software codes can be stored in a storage medium selected from one group consisting of random access memory, a flash memory, a read-only memory, a programmable read-only memory, an electrically erasable programmable memory, and registers. The processor reads information (e.g., instructions) in the memory and completes the above-mentioned actions of the method in combination with hardware.

As is understood by a person skilled in the art, the foregoing preferred embodiments of the present disclosure are illustrative rather than limiting of the present disclosure. It is intended that they cover various modifications and similar arrangements be included within the scope of the present disclosure, the scope of which should be limited by the appended claims.

## Claims

1. An array substrate (10), comprising:
a touch control region (100) comprising a M number of touch control rows (110) and a plurality of touch control columns (120) that are arranged by a plurality of touch control units (130), wherein the touch control columns (120) comprise first touch control columns (121) and second touch control columns (122), wherein each of the first touch control columns (121) is adjacent to one of the second touch control columns (122) and each of the second touch control columns (122) is adjacent to one of the first touch control columns (121), wherein M is a positive integer;
a plurality of interval rows (140) defined by the touch control rows (110), wherein every two adjacent touch control rows (110) comprises an interval row (140), wherein each interval row is a space between two adjacent touch control rows; and
a plurality of touch control connection lines (11) comprising a first touch control connection line (11) and a second touch control connection line (11),
wherein M is a positive even integer, the interval rows (140) between the touch control rows (110) comprise a middle interval row (140) at a middle position of the touch control region (100),
each of the touch control connection lines (11) connects with two touch control units (130),
**characterized in that** in each of the first touch control columns (121), every two touch control units (130) connected by the first touch control connection line (11) are symmetrically arranged relative to the middle interval row (140), wherein in each of the second touch control columns (122), every two touch control units (130) connected by the second touch control connection line (11) are asymmetrically arranged at two sides of the middle interval row (140), wherein a distance of M/2 interval rows (140) is spaced between the two touch control units (130) that are connected by the second touch control connection line (11).

2. An array substrate (10), comprising:
a touch control region (100) comprising a M number of touch control rows (110) and a plurality of touch control columns (120) that are arranged by a plurality of touch control units (130), wherein the touch control columns (120) comprise first touch control columns (121) and second touch control columns (122), wherein each of the first touch control columns (121) is adjacent to one of the second touch control columns (122) and each of the second touch control columns (122) is adjacent to one of the first touch control columns (121), wherein M is a positive integer;
a plurality of interval rows (140) defined by the touch control rows (110), wherein every two adjacent touch control rows (110) comprises an interval row (140), wherein each interval row is a space between two adjacent touch control rows; and
a plurality of touch control connection lines (11) comprising a first touch control connection line (11) and a second touch control connection line (11);
wherein M is a positive odd integer, the touch control rows (110) comprise a middle touch control row (110) at the middle position of the touch control region (100),
some of the touch control connection lines (11) are connected to touch control unit (130) of the middle touch control rows (110) one to one, each of other touch control connection lines (11) connects with two touch control units;
**characterized in that** in each of the first touch control columns (121), every two touch control units (130) connected by the first touch control connection line (11) are symmetrically arranged relative to the middle touch control row (110), wherein in each of the second touch control columns (122), every two touch control units (130) connected by the second touch control connection line (11) are asymmetrically arranged at two sides of the middle touch control row (110), wherein a distance of (M-1)/2 touch control rows (110) is spaced between the two touch control units (130) that are connected by the second touch control connection line (11).

3. The array substrate (10) according to claim 1 or 2, wherein each of the touch control columns (120) in the touch control region (100) comprises a first end portion (101), a second end portion (102) opposite to the first end portion (101), a first side portion (103), and a second side portion (104) opposite to the first side portion (103), wherein the first side portion (103) and the second side portion (104) connect with two sides of the first end portion (101) and the second end portion (102).

4. The array substrate (10) according to claim 3, wherein the touch control connection lines (11) in each of the first touch control columns (121) are sequentially arranged along a direction from the first side portion (103) to the second side portion (104), and lengths of the touch control connection lines (11) become shorter along the direction within the first end portion (101) and the second end portion (102).

5. The array substrate (10) according to claim 4, wherein the touch control connection lines (11) in each of the second touch control columns (122) are sequentially arranged along the direction from the first side portion (103) to the second side portion (104).

6. The array substrate (10) according to claim 5, wherein the lengths of the touch control connection lines (11) become shorter along the direction within the first end portion (101) and the second end portion (102).

7. The array substrate (10) according to claim 1, wherein the array substrate further comprises a plurality of interval columns (150), wherein widths of the interval columns (150) are same, and every two adjacent touch control columns (120) comprise an interval column (150).

8. The array substrate (10) according to claim 1, wherein each of the touch control units (130) is rectangular in shape, and the touch control units (130) are arranged in a matrix configuration.

9. The array substrate according to claim 1, wherein every two adjacent touch control rows (110) comprises an interval row (140), and widths of the interval rows (140) are same.

10. The array substrate (10) according to claim 2, wherein each of the touch control units (130) of the middle touch control row (110) is connected to a touch control chip (12) by one of the touch control connection lines (11), and every two touch control units (130) of touch control units (130) arranged on two sides of the middle touch control row (110) are connected each other by one of the touch control connection lines (11) that are connected to the touch control chip (12).

11. A self-capacitive touch display panel (1), wherein the self-capacitive touch display panel comprises:
a color film substrate (20);
an array substrate (10); and
a liquid crystal layer (30) arranged between the color film substrate (20) and the array substrate (10), wherein the array substrate (10) is claimed as any one of claims 1 to 10.

12. An electronic apparatus, wherein the electronic apparatus comprises:
a shell body; and
a self-capacitive touch display panel (1) arranged in the shell body, wherein the self-capacitive touch display panel (1) is claimed as claim 11.

## Patentansprüche

1. Arraysubstrat (10), das Folgendes umfasst:
einen Berührungssteuerungsbereich (100), der eine Anzahl M an Berührungssteuerungszeilen (110) und eine Mehrzahl von Berührungssteuerungsspalten (120) umfasst, die durch eine Mehrzahl von Berührungssteuerungseinheiten (130) angeordnet sind, wobei die Berührungssteuerungsspalten (120) erste Berührungssteuerungsspalten (121) und zweite Berührungssteuerungsspalten (122) umfassen, wobei jede der ersten Berührungssteuerungsspalten (121) an eine der zweiten Berührungssteuerungsspalten (122) angrenzt und jede der zweiten Berührungssteuerungsspalten (122) an eine der ersten Berührungssteuerungsspalten (121) angrenzt, wobei M eine positive Ganzzahl ist;
eine Mehrzahl von Zwischenraumzeilen (140), die durch die Berührungssteuerungszeilen (110) definiert sind, wobei jeweils zwei angrenzende Berührungssteuerungszeilen (110) eine Zwischenraumzeile (140) umfassen, wobei jede Zwischenraumzeile ein Raum zwischen zwei angrenzenden Berührungssteuerungszeilen ist; und
eine Mehrzahl von Berührungssteuerungsverbindungsleitungen (11), die eine erste Berührungssteuerungsverbindungsleitung (11) und eine zweite Berührungssteuerungsverbindungsleitung (11) umfassen,
wobei M eine positive gerade Ganzzahl ist, wobei die Zwischenraumzeilen (140) zwischen den Berührungssteuerungszeilen (110) eine mittlere Zwischenraumzeile (140) an einer mittleren Position des Berührungssteuerungsbereichs (100) umfassen,
wobei jede der Berührungssteuerungsverbindungsleitungen (11) mit zwei Berührungssteuerungseinheiten (130) verbunden ist,
**dadurch gekennzeichnet, dass** in jeder der ersten Berührungssteuerungsspalten (121) jeweils zwei Berührungssteuerungseinheiten (130), die durch die erste Berührungssteuerungsverbindungsleitung (11) verbunden sind, symmetrisch in Relation zu der mittleren Zwischenraumzeile (140) angeordnet sind, wobei in jeder der zweiten Berührungssteuerungsspalten (122) jeweils zwei Berührungssteuerungseinheiten (130), die durch die zweite Berührungssteuerungsverbindungsleitung (11) verbunden sind, asymmetrisch auf zwei Seiten der mittleren Zwischenraumzeile (140) angeordnet sind, wobei ein Abstand von M/2 Zwischenraumzeilen (140) zwischen den zwei Berührungssteuerungseinheiten (130), die durch die zweite Berührungssteuerungsverbindungsleitung (11) verbunden sind, beabstandet ist.

2. Arraysubstrat (10), das Folgendes umfasst:
einen Berührungssteuerungsbereich (100), der eine Anzahl M an Berührungssteuerungszeilen (110) und eine Mehrzahl von Berührungssteuerungsspalten (120) umfasst, die durch eine Mehrzahl von Berührungssteuerungseinheiten (130) angeordnet sind, wobei die Berührungssteuerungsspalten (120) erste Berührungssteuerungsspalten (121) und zweite Berührungssteuerungsspalten (122) umfassen, wobei jede der ersten Berührungssteuerungsspalten (121) an eine der zweiten Berührungssteuerungsspalten (122) angrenzt und jede der zweiten Berührungssteuerungsspalten (122) an eine der ersten Berührungssteuerungsspalten (121) angrenzt, wobei M eine positive Ganzzahl ist;
eine Mehrzahl von Zwischenraumzeilen (140), die durch die Berührungssteuerungszeilen (110) definiert sind, wobei jeweils zwei angrenzende Berührungssteuerungszeilen (110) eine Zwischenraumzeile (140) umfassen, wobei jede Zwischenraumzeile ein Raum zwischen zwei angrenzenden Berührungssteuerungszeilen ist; und
eine Mehrzahl von Berührungssteuerungsverbindungsleitungen (11), die eine erste Berührungssteuerungsverbindungsleitung (11) und eine zweite Berührungssteuerungsverbindungsleitung (11) umfassen;
wobei M eine positive ungerade Ganzzahl ist, wobei die Zwischenraumzeilen (110) eine mittlere Berührungssteuerungszeile (110) an der mittleren Position des Berührungssteuerungsbereichs (100) umfassen,
wobei einige der Berührungssteuerungsverbindungsleitungen (11) mit einer Berührungssteuerungseinheit (130) der mittleren Berührungssteuerungszeilen (110) eins zu eins verbunden sind, wobei jede anderer Berührungssteuerungsverbindungsleitungen (11) mit zwei Berührungssteuerungseinheiten verbunden ist;
**dadurch gekennzeichnet, dass** in jeder der ersten Berührungssteuerungsspalten (121) jeweils zwei Berührungssteuerungseinheiten (130), die durch die erste Berührungssteuerungsverbindungsleitung (11) verbunden sind, symmetrisch in Relation zu der mittleren Berührungssteuerungszeile (110) angeordnet sind, wobei in jeder der zweiten Berührungssteuerungsspalten (122) jeweils zwei Berührungssteuerungseinheiten (130), die durch die zweite Berührungssteuerungsverbindungsleitung (11) verbunden sind, asymmetrisch auf zwei Seiten der mittleren Zwischenraumzeile (110) angeordnet sind, wobei ein Abstand von (M-1)/2 Berührungssteuerungszeilen (110) zwischen den zwei Berührungssteuerungseinheiten (130), die durch die zweite Berührungssteuerungsverbindungsleitung (11) verbunden sind, beabstandet ist.

3. Arraysubstrat (10) nach Anspruch 1 oder 2, wobei jede der Berührungssteuerungsspalten (120) in dem Berührungssteuerungsbereich (100) einen ersten Endabschnitt (101), einen zweiten Endabschnitt (102) gegenüber dem ersten Endabschnitt (101), einen ersten Seitenabschnitt (103) und einen zweiten Seitenabschnitt (104) gegenüber dem ersten Seitenabschnitt (103) umfasst, wobei der erste Seitenabschnitt (103) und der zweite Seitenabschnitt (104) mit zwei Seiten des ersten Endabschnitts (101) und des zweiten Endabschnitts (102) verbunden sind.

4. Arraysubstrat (10) nach Anspruch 3, wobei die Berührungssteuerungsverbindungsleitungen (11) in jeder der ersten Berührungssteuerungsspalten (121) sequentiell entlang einer Richtung von dem ersten Seitenabschnitt (103) zu dem zweiten Seitenabschnitt (104) angeordnet sind, und wobei Längen der Berührungssteuerungsverbindungsleitungen (11) entlang der Richtung innerhalb des ersten Endabschnitts (101) und des zweiten Endabschnitts (102) kürzer werden.

5. Arraysubstrat (10) nach Anspruch 4, wobei die Berührungssteuerungsverbindungsleitungen (11) in jeder der zweiten Berührungssteuerungsspalten (122) sequentiell entlang der Richtung von dem ersten Seitenabschnitt (103) zu dem zweiten Seitenabschnitt (104) angeordnet sind.

6. Arraysubstrat (10) nach Anspruch 5, wobei die Längen der Berührungssteuerungsverbindungsleitungen (11) entlang der Richtung innerhalb des ersten Endabschnitts (101) und des zweiten Endabschnitts (102) kürzer werden.

7. Arraysubstrat (10) nach Anspruch 1, wobei das Arraysubstrat ferner eine Mehrzahl von Zwischenraumspalten (150) umfasst, wobei Breiten der Zwischenraumspalten (150) gleich sind und jeweils zwei angrenzende Berührungssteuerungsspalten (120) eine Zwischenraumspalte (150) umfassen.

8. Arraysubstrat (10) nach Anspruch 1, wobei jede der Berührungssteuerungseinheiten (130) eine rechteckige Form aufweist und die Berührungssteuerungseinheiten (130) in einer Matrixkonfiguration angeordnet sind.

9. Arraysubstrat nach Anspruch 1, wobei jeweils zwei angrenzende Berührungssteuerungszeilen (110) eine Zwischenraumzeile (140) umfassen und Breiten der Zwischenraumzeilen (140) gleich sind.

10. Arraysubstrat (10) nach Anspruch 2, wobei jede der Berührungssteuerungseinheiten (130) der mittleren Berührungssteuerungszeile (110) mit einem Berührungssteuerungschip (12) durch eine der Berührungssteuerungsverbindungsleitungen (11) verbunden ist, und wobei jeweils zwei Berührungssteuerungseinheiten (130) von Berührungssteuerungseinheiten (130), die auf zwei Seiten der mittleren Berührungssteuerungszeile (110) angeordnet sind, durch eine der Berührungssteuerungsverbindungsleitungen (11) miteinander verbunden sind, die mit dem Berührungssteuerungschip (12) verbunden sind.

11. Eigenkapazitive Berührungsanzeigetafel (1), wobei die eigenkapazitive Berührungsanzeigetafel Folgendes umfasst:
ein Farbfilmsubstrat (20);
ein Arraysubstrat (10); und
eine Flüssigkristallschicht (30), die zwischen dem Farbfilmsubstrat (20) und dem Arraysubstrat (10) angeordnet ist, wobei das Arraysubstrat (10) nach einem der Ansprüche 1 bis 10 beansprucht ist.

12. Elektronische Einrichtung, wobei die elektronische Einrichtung Folgendes umfasst:
einen Schalenkörper; und
eine eigenkapazitive Berührungsanzeigetafel (1), die in dem Schalenkörper angeordnet ist, wobei die eigenkapazitive Berührungsanzeigetafel (1) nach Anspruch 11 beansprucht ist.

## Revendications

1. Substrat matriciel (10), comprenant :
une région de commande tactile (100) comprenant un nombre M de rangées de commande tactile (110) et une pluralité de colonnes de commande tactile (120) qui sont agencées par une pluralité d'unités de commande tactile (130), les colonnes de commande tactile (120) comprenant des premières colonnes de commande tactile (121) et des secondes colonnes de commande tactile (122), chacune des premières colonnes de commande tactile (121) étant adjacente à une des secondes colonnes de commande tactile (122) et chacune des secondes colonnes de commande tactile (122) étant adjacente à une des premières colonnes de commande tactile (121), M étant un entier positif ;
une pluralité de rangées d'intervalle (140) définies par les rangées de commande tactile (110), toutes les deux rangées de commande tactile adjacentes (110) comprenant une rangée d'intervalle (140), chaque rangée d'intervalle étant un espace entre deux rangées de commande tactile adjacentes ; et
une pluralité de lignes de connexion de commande tactile (11) comprenant une première ligne de connexion de commande tactile (11) et une seconde ligne de connexion de commande tactile (11),
M étant un entier positif pair, les rangées d'intervalle (140) entre les rangées de commande tactile (110) comprenant une rangée d'intervalle centrale (140) au niveau d'une position centrale de la région de commande tactile (100),
chacune des lignes de connexion de commande tactile (11) se connectant à deux unités de commande tactile (130),
le substrat matriciel étant **caractérisé en ce que**, dans chacune des premières colonnes de commande tactile (121), toutes les deux unités de commande tactile (130) connectées par la première ligne de connexion de commande tactile (11) sont agencées symétriquement par rapport à la rangée d'intervalle centrale (140), dans chacune des secondes colonnes de commande tactile (122), toutes les deux unités de commande tactile (130) connectées par la seconde ligne de connexion de commande tactile (11) sont agencées asymétriquement de deux côtés de la rangée d'intervalle centrale (140), une distance de M/2 rangées d'intervalle (140) étant espacée entre les deux unités de commande tactile (130) qui sont connectées par la seconde ligne de connexion de commande tactile (11).

2. Substrat matriciel (10), comprenant :
une région de commande tactile (100) comprenant un nombre M de rangées de commande tactile (110) et une pluralité de colonnes de commande tactile (120) qui sont agencées par une pluralité d'unités de commande tactile (130), les colonnes de commande tactile (120) comprenant des premières colonnes de commande tactile (121) et des secondes colonnes de commande tactile (122), chacune des premières colonnes de commande tactile (121) étant adjacente à une des secondes colonnes de commande tactile (122) et chacune des secondes colonnes de commande tactile (122) étant adjacente à une des premières colonnes de commande tactile (121), M étant un entier positif ;
une pluralité de rangées d'intervalle (140) définies par les rangées de commande tactile (110), toutes les deux rangées de commande tactile adjacentes (110) comprenant une rangée d'intervalle (140), chaque rangée d'intervalle étant un espace entre deux rangées de commande tactile adjacentes ; et
une pluralité de lignes de connexion de commande tactile (11) comprenant une première ligne de connexion de commande tactile (11) et une seconde ligne de connexion de commande tactile (11) ;
M étant un entier positif impair, les rangées de commande tactile (110) comprenant une rangée de commande tactile centrale (110) au niveau de la position centrale de la région de commande tactile (100),
certaines des lignes de connexion de commande tactile (11) étant connectées une à une à une unité de commande tactile (130) des rangées de commande tactile centrales (110), d'autres lignes de connexion de commande tactile (11) se connectant chacune à deux unités de commande tactile ;
le substrat matriciel étant **caractérisé en ce que**, dans chacune des premières colonnes de commande tactile (121), toutes les deux unités de commande tactile (130) connectées par la première ligne de connexion de commande tactile (11) sont agencées symétriquement par rapport à la rangée de commande tactile centrale (110), dans chacune des secondes colonnes de commande tactile (122), toutes les deux unités de commande tactile (130) connectées par la seconde ligne de connexion de commande tactile (11) sont agencées asymétriquement de deux côtés de la rangée de commande tactile centrale (110), une distance de (M-1)/2 rangées de commande tactile (110) étant espacée entre les deux unités de commande tactile (130) qui sont connectées par la seconde ligne de connexion de commande tactile (11).

3. Substrat matriciel (10) selon la revendication 1 ou 2, dans lequel chacune des colonnes de commande tactile (120) dans la région de commande tactile (100) comprend une première partie extrême (101), une seconde partie extrême (102) opposée à la première partie extrême (101), une première partie latérale (103) et une seconde partie latérale (104) opposée à la première partie latérale (103), la première partie latérale (103) et la seconde partie latérale (104) se connectant à deux côtés de la première partie extrême (101) et de la seconde partie extrême (102).

4. Substrat matriciel (10) selon la revendication 3, dans lequel les lignes de connexion de commande tactile (11) dans chacune des premières colonnes de commande tactile (121) sont agencées séquentiellement selon une direction allant de la première partie latérale (103) à la seconde partie latérale (104), et des longueurs des lignes de connexion de commande tactile (11) deviennent plus courtes selon la direction dans les limites de la première partie extrême (101) et de la seconde partie extrême (102).

5. Substrat matriciel (10) selon la revendication 4, dans lequel les lignes de connexion de commande tactile (11) dans chacune des secondes colonnes de commande tactile (122) sont agencées séquentiellement selon la direction allant de la première partie latérale (103) à la seconde partie latérale (104).

6. Substrat matriciel (10) selon la revendication 5, dans lequel les longueurs des lignes de connexion de commande tactile (11) deviennent plus courtes selon la direction dans les limites de la première partie extrême (101) et de la seconde partie extrême (102).

7. Substrat matriciel (10) selon la revendication 1, le substrat matriciel comprenant en outre une pluralité de colonnes d'intervalle (150), des largeurs des colonnes d'intervalle (150) étant identiques et toutes les deux colonnes de commande tactile (120) adjacentes comprenant une colonne d'intervalle (150).

8. Substrat matriciel (10) selon la revendication 1, dans lequel chacune des unités de commande tactile (130) est de forme rectangulaire, et les unités de commande tactile (130) sont agencées en une configuration matricielle.

9. Substrat matriciel selon la revendication 1, dans lequel toutes les deux rangées de commande tactile (110) adjacentes comprennent une rangée d'intervalle (140), et des largeurs des rangées d'intervalle (140) sont identiques.

10. Substrat matriciel (10) selon la revendication 2, dans lequel chacune des unités de commande tactile (130) de la rangée de commande tactile centrale (110) est connectée à une puce de commande tactile (12) par une des lignes de connexion de commande tactile (11), et toutes les deux unités de commande tactile (130) d'unités de commande tactile (130) agencées de deux côtés de la rangée de commande tactile centrale (110) sont connectées l'une à l'autre par une des lignes de connexion de commande tactile (11) qui sont connectées à la puce de commande tactile (12).

11. Panneau d'affichage tactile auto-capacitif (1), le panneau d'affichage tactile auto-capacitif comprenant :
un substrat de film coloré (20) ;
un substrat matriciel (10) ; et
une couche à cristaux liquides (30) agencée entre le substrat de film coloré (20) et le substrat matriciel (10), le substrat matriciel (10) étant selon l'une quelconque des revendications 1 à 10.

12. Appareil électronique, l'appareil électronique comprenant :
un corps formant coque ; et
un panneau d'affichage tactile auto-capacitif (1) agencé dans le corps formant coque, le panneau d'affichage tactile auto-capacitif (1) étant selon la revendication 11.
